# EUROPÄISCHE PATENTSCHRIFT

(11) **EP 2 125 909 B1**
(45) Veröffentlichungstag und Bekanntmachung des Hinweises auf die Patenterteilung: **06.04.2011**
(21) Anmeldenummer: 07857047.0
(22) Anmeldetag: 21.12.2007
(51) Int. Cl.: C08F 8/32, C09D 17/00, B01F 17/00, C09B 67/00

(54) **KAMM(BLOCK)COPOLYMERE**
COMB (BLOCK) COPOLYMERS
COPOLYMÈRES (SÉQUENCÉS) EN PEIGNE

(30) Priorität: 27.12.2006 DE 102006062439
(43) Veröffentlichungstag der Anmeldung: 02.12.2009
(73) Patentinhaber: BYK-Chemie GmbH, 46483 Wesel (DE)
(72) Erfinder: GÖBELT, Bernd, 46487 Wesel (DE); OMEIS, Jürgen, 46286 Dorsten-Lembeck (DE); ORTH, Ulrich, 46485 Wesel (DE); HOLTKAMP, Heribert, 46487 Wesel (DE); MEICHSNER, Marcus, 47475 Kamp-Lintfort (DE)
(74) Vertreter: Kutzenberger, Helga
(86) Internationale Anmeldenummer: PCT/EP2007/011328
(87) Internationale Veröffentlichungsnummer: WO 2008/080579

(56) Entgegenhaltungen:
- EP-A- 1 026 178
- EP-A- 1 046 685
- US-A- 5 364 909
- US-B1- 6 406 143

## Beschreibung

Die vorliegende Erfindung betrifft Kamm(block)copolymere erhältlich durch Umsetzung von
I wenigstens einem (Block)Copolymerisat umfassend polymerisierte, ggf. substituierte Styrol- und Maleinsäureanhydrid-Einheiten, das durch lebende, radikalische Polymerisation erhalten wurde,
   mit
II wenigstens einem eine primäre Aminoendgruppe aufweisenden Polyalkylenoxidmonoamin bei einer Reaktionstemperaturen von ≥ 150 °C
   und durch eine anschließende Versalzung von wenigstens 25 mol% der freien Carboxylgruppen des Umsetzungsproduktes bei einer Reaktionstemperatur < 100 °C und ggf. nach Zugabe von H₂O.

Es ist bekannt, dass eine Vielzahl von Kammcopolymeren als Netz- und Dispergiermittel, insbesondere für Pigmente, verwendet werden können. So sind aus dem Stand der Technik bereits Kammcopolymere bekannt, die durch Umsetzung von Styrol- bzw. Maleinsäureanhydridcopolymeren (SMA-Harze) mit Polyalkylenoxidaminen und Polyalkylenoxidglycolen erhalten werden. In dem US-Patent US 6,310,143 werden entsprechend hergestellte Kammcopolymere beschrieben, die neben Imidstrukturen Amid- und Esterverknüpfungen der Seitenkette mit der Hauptkette zwingend aufweisen müssen, wodurch für eine Reihe von Einsatzzwecken diese Kammcopolymere als Dispergier- und Netzmittel nicht die notwendige Hydrolysenstabilität aufweisen.

Dies gilt auch für die Kammcopolymeren, die aus dem US-Patent US 6,406,143 bekannt, die keine Imidbindungen, sondern nur Amid- und Esterverknüpfungen der Seitenketten mit der Hauptkette aus Styrol-Maleinsäureanhydridcopolymer aufweisen.

Gegenüber diesem Stand der Technik bestand daher ein Bedarf, Kammcopolymere basierend auf Styrol-Maleinsäureanhydrid-Copolymerisaten mit linearen Polyalkylenoxidpolymeren als Seitenketten zur Verfügung zu stellen, die nicht nur eine ausgezeichnete Hydrolysenstabilität sondern auch eine ausgezeichnete Netz-und Dispergierwirkung aufweisen und sich dadurch für viele Anwendungsgebiete, insbesondere für die Herstellung von Pigmentpasten und deren Einsatz in unterschiedlichen Produkten, hervorragend eigenen.

Aufgabe der vorliegenden Erfindung war es daher, Kammcopolymere auf Basis von Styrol-Maleinsäureanhydrid-Copolymeren mit linearen Polyalkylenoxid Seitenketten zur Verfügung zu stellen, die zu einer verbesserten Netz-und Dispergierwirkung in Feststoffdispersionen, insbesondere von Pigmentdispersionen führen.

Diese Aufgabe wird durch das zur Verfügung stellen der erfindungsgemäßen Kamm(block)copolymeren erhältlich durch Umsetzung von
I wenigstens einem (Block)Copolymerisat umfassend polymerisierte, ggf. substituierte Styrol- und Maleinsäureanhydrid-Einheiten, das durch kontrollierte, radikalische Polymerisation erhalten wurde,
II wenigstens einem eine primäre Aminoendgruppe aufweisenden Polyalkylenoxidmonoamin bei einer Reaktionstemperaturen von
   ≥ 150°C und
   durch eine anschließende Versalzung von wenigstens 25 mol% der freien Carboxylgruppen des Umsetzungsproduktes bei einer Reaktionstemperatur < 100 °C mit II, ggf. anderen tertiären Aminen und ggf. nach Zugabe von H₂O,
   gelöst.

Die bei der Umsetzung als Hauptkette zum Einsatz kommende SMA-Harze sind ggf. substituierte Styrol-Maleinsäureanhydrid-Copolymerisate, wobei das Styrol gegebenenfalls mit Alkylgruppen mit 1 bis 15 C-Atomen, vorzugsweise mit Methyl, mit Arylgruppen mit 6 bis 18 C-Atomen, Halogen, vorzugsweise Chlor, oder wenigstens einer Nitrogruppe substituiert sein kann.

Erfindungsgemäß wird daher unter dem "S" des Begriffs SMA-Harz sowohl ein substituiertes als auch ein unsubstituiertes Styrol verstanden.

Die SMA-Harze können einen stabilen, alternierenden, gradientenartigen oder blockartigen Aufbau aufweisen.

Die SMA-Harze für die erfindungsgemäßen Polymere werden vorzugsweise über folgende kontrollierte radikalische Polymerisationsverfahren hergestellt:
- der "Reversible Addition Fragmentation Chain Transfer Process" (RAFT), der bei Verwendung bestimmter Polymerisationsregler auch "MADIX" and "Addition Fragmentation Chain Transfer' genannt und hier nur als RAFT bezeichnet werden, wie beispielsweise in Polym. Int. 2000, 49, 993, Aust. J. Chem 2005, 58, 379, J. Polym. Sei. Part A: Polym. Chem. 2005, 43, 5347, US 6 291 620, WO 98/01478, WO 98/58974 und WO 99131144 offenbart ist oder,
- die kontrollierte Polymerisation mit Nitroxylverbindungen als Polymerisationsregler (NMP), wie beispielsweise in Chem. Rev. 2001, 101, 3661 offenbart ist.

Besonders bevorzugt ist als Polymerisationstechnologie das C-RAFT-Verfahren, dass in US 6 291 620 beschrieben wird. Besonders bevorzugt werden die SMA-Harze durch kontrollierte radikalische Polymerisation in Gegenwart von 2,4-Diphenyl-4-methyl-1-penten als Kettenüberträger hergestellt.

Vorzugsweise liegt das ggf. substituierte Styrol-Maleinsäureanhydrid-Molverhältnis so hergestellter SMA-Harze bei 1:1 bis 8:1. Besonders bevorzugt ist ein ggf. substituiertes Styrol-Maleinsäureanhydrid-Molverhältnis von 1:1 bis 2:1. Das zahlengemittelte Molekulargewicht der verwendeten SMA-Harze liegt vorzugsweise zwischen 1000 g/mol und 20 000 g/mol (bestimmt mit GPC).

Die für die Darstellung der erfindungsgemäßen SMA-Harze verwendeten monofunktionellen Initiatoren starten eine Polymerkette mit nur einer Wachstumsrichtung. Die im jeweiligen lebenden, kontrollierten Polymerisationsverfahren eingesetzten monofunktionellen. Initiatoren sind dem Durchschnittsfachmann bekannt. Als Initiatoren können beispielsweise Azoinitiatoren wie Azodiisobutyronitril, Peroxidverbindungen, wie Dibenzoylperoxid und Dicumylperoxid als auch Persulfate wie Kaliumperoxodisulfat eingesetzt werden.

Beispiele für Polymerisationsregler sind in der oben zitierten Literatur aufgeführt; für NMP sind zum Beispiel 2,2,6,6-Tetramethylpiperidinoxyl (TEMPO) oder N-tert-Butyl-N-[1-diethylphosphono-(2,2-dimethylpropyl)]nitroxyl und für RAFT beispielsweise Thiocarbonsäureester, Xanthogensäureester oder 2,4-Diphenyl-4-methyl-1-penten geeignet.

Des Weiteren können bei der NMP Addukte des Initiators mit dem Polymerisationsregler eingesetzt werden, wie zum Beispiel in Chem. Rev. 2001, 101, 3661, "V. Approaches to Alkoxyamines oder in Angewandte Chemie Int. Ed. 2004, 43, 6186 beschrieben.

Die Polymerisation kann in organischen Lösemitteln erfolgen. Beispiele für geeignete Lösemittel sind aromatische Verbindungen wie Xylol oder Carbonsäureester wie 2-Methoxypropylacetat oder Butylacetat.

Die Polymerisationstemperatur richtet sich nach der Polymerisationstechnologie und der Halbwertszeit der verwendeten Initiatoren. In der Regel liegt sie zwischen 60°C und 200°C, bevorzugt zwischen 100°C und 160°C.

Als Polyalkylenoxidmonoamine zur Herstellung der erfindungsgemäßen Kamm(block)copolymeren werden vorzugsweise C₁-C₄-Monoalkohol gestartete Polyether, die aus Ethylenoxid- und Propylenoxid-Einheiten aufgebaut sind und eine primäre Aminogruppe als Endgruppe tragen, verwendet. Das Gewichtsverhältnis von Ethylenoxidzu Propylenoxid-Einheiten sollte vorzugsweise zwischen 5:95 und 100:0, besonders bevorzugt zwischen 30:70 und 70:30, liegen. Das zahlengemittelte Molekulargewicht der zum Einsatz kommenden Polyalkylenoxidmonoamine liegt vorzugsweise zwischen 500 g/mol und 3000 g/mol (bestimmt über Aminzahl oder ¹H-NMRSpektroskopie).

Für die Umsetzung mit dem (Block)copolymerisat I bei Reaktionstemperatur ≥ 150°C kann ein Polyalkylenoxidmonoamin verwendet werden, das sich von dem Polyalkylenoxidmonoamin unterscheidet, das zur Versalzung der freien Carboxylgruppen des Umsetzungsproduktes eingesetzt wird. Vorzugsweise ist es identisch.

Darüber hinaus können bis zu 50% des zur Versalzung notwendigen Polyalkylenoxidmonoamins durch eine weitere Aminoverbindung, vorzugsweise durch wenigstens eine tertiäre Monoaminverbindung ersetzt werden, wie zum Beispiel N,N-Dimethylethanolamin, N,N-Diethylethanolamin, N,N-Dibutylethanolamin, Methyldiethanolamin, Ethyldiethanolamin oder Triethanolamin.

Die erfindungsgemäßen Kamm(block)copolymere sind vorzugsweise dadurch erhältlich, dass zunächst wenigstens ein SMA-Harz, das durch lebende, radikalische Polymerisation unter Einsatz von 2,4-Diphenyl-4-methyl-1-penten hergestellt wurde, in einem geeigneten Lösungsmittel angelöst wird. Dazu wird wenigstens ein Polyalkylenoxidmonoamin in einem Molverhältnis der Aminokomponente zu den Maleinsäureanhydrid-Einheiten der SMA-Harze von 75% bis 25% zugegeben und bei Reaktionstemperaturen von ≥ 150°C, bevorzugt ≥ 160°C so lange umsetzt, dass vorzugsweise mindestens 25 mol%, besonders bevorzugt mindestens 50 mol% der Anhydridstrukturen des (Block)copolymerisats umgesetzt werden. Hierbei reagieren die primären Aminogruppen mit den Anhydridstrukturen der (Block)copolymerisats fast ausschließlich zu Imidstrukturen. Während der Umsetzung wird vorzugsweise das anfänglich zugegebene Lösungsmittel abdestilliert. Da bei der Imidbildung Wasser gebildet wird, können weitere Anhydridstrukturen des (Block)copolymerisats zu Carbonsäurefunktionen freigesetzt werden. Ggf. kann nach Absenkung der Reaktionstemperatur auch noch Wasser zu der Reaktionsmischung zugegeben werden, wenn dies notwendig ist. Dann wird die Reaktionsmischung auf < 100°C abgekühlt bevor zur weiteren Versalzung der freien Carboyxylgruppen weiteres Polyalkylenoxidmonoamin, vorzugsweise solches, das bereits zur Umsetzung bei ≥ 150°C verwendet wurde oder ein davon unterschiedliches Polyalkylenoxidmonoamin und/oder ggf. zusätzlich noch ein niedermolekulares tertiäres Monoamin, wie vorstehend aufgeführt, zugegeben wird.

Vorzugsweise erfolgt die Zugabe der Polyalkylenoxidmonoaminkomponente in 2 Teilen, wobei sich die erste Teilmenge entsprechend dem vorstehend angebenen, angestrebten Umsetzungsgrad der Anhydridgruppen zu Imidstrukturen bemisst, während der Rest bzw. die 2. Teilmenge des Polyalkylenmonoamins und des ggf. mitverwendeten tertiäres Monoamin sich nach dem Versalzungsgrad von wenigstens 25 mol%, vorzugsweise von wenigstens 50 mol% der freien Carboxylgruppen des Umsetzungsproduktes richtet.

Die Mitverwendung eines Lösungsmittels für des (Block)copolymerisat bei der Umsetzung mit der Polyalkylenoxidmonoaminkomponenten gewährleistet, dass sämtliche Anhydridgruppen der (Bock)copolymerisate weitgehend gleichwertig bereits ab Beginn der Umsetzung reagieren können. Dadurch wird ein homogeneres Produkt erhalten.

Das versalzte Umsetzungsprodukt kann durch Zugabe von Wasser verdünnt werden. Erfindungsgemäß wird unter einem Kamm(block)copolymeren ein Polymeres verstanden, dessen Copolymerisat bzw. Blockcopolymerisat als Basispolymeres oder Hauptkette im wesentlichen über Amid- und Imid-Bindungen mit linearen, polymeren Seitenketten kovalent verbunden ist.

Die erfindungsgemäßen Kamm(block)copolymere eignen sich als Netz- und Dispergiermittel für viele aus dem Stand der Technik bekannten Einsatzzwecke. So können diese z. B. bei der Herstellung oder Verarbeitung von Lacken, Druckfarben, Tinten für inkjet-Verfahren wie für Tintenstrahldrucker, Papierstrich, Leder- und Textilfarben, Pasten, Pigmentkonzentraten, Keramiken, kosmetischen Zubereitungen eingesetzt werden, vorzugsweise immer dann, wenn Feststoffe wie Pigmente und/oder Füllstoffe vorhanden sind. Auch bei der Herstellung oder Verarbeitung von Gieß- und/oder Formmassen auf Basis von synthetischen, halbsynthetischen oder natürlichen Polymeren wie zum Beispiel Polyvinylchloriden, gesättigten oder ungesättigten Polyester, Polyurethanen, Polystyrolen, Polyacrylaten, Polyamiden, Epoxidharzen, Polyolefinen wie Polyethylenen oder Polypropylenen können die erfindungsgemäßen Kamm(block)copolymere eingesetzt werden. Beispielsweise lassen sich die erfindungsgemäßen Kamm(block)copolymere bei der Herstellung von Gießmassen, PVC-Plastisolen, Gelcoats, Polyrnerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken verwenden, wobei ggf. übliche bekannte Bindemittel und/oder Lösungsmittel, Pigmente und gegebenenfalls Füllstoffe, die erfindungsgemäßen Kamm(block)copolymere und übliche Hilfsstoffe dazu gemischt werden. Beispiele für übliche Bindemittel sind Harze auf Basis von Polyurethanen, Cellulosenitraten, Celluloseacetobutyraten, Alkyd, Melamin, Polyester, Chlorkautschuk, Epoxid und Acrylat.

Als Netz- und Dispergiermittel eigenen sich die erfindungsgemäßen Kamm(block)copolymeren auch für die Herstellung von Beschichtungen auf Wasserbasis, wie kathodischen oder anodischen Elektrotauchlackierungen beispielsweise für Automobilkarossen. Weitere Beispiele für einen Einsatz als Dispergiermittel sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen einem Kamm(block)copolymeren eignen sich insbesondere auch zur Herstellung von Feststoffkonzentraten, vorzugsweise von Pigmentkonzentraten. Dazu werden diese in einem Trägermedium wie in organischem Lösungsmitteln, Weichmachern und/oder Wasser, vorgelegt und die zu dispergierenden Feststoffe unter Rühren zugegeben. Zusätzlich können diese Konzentrate Bindemittel und/oder andere Hilfsstoffe enthalten. Mit den erfindungsgemäßen Kamm(block)copolymeren ist aber auch in vorteilhafter Weise möglich, stabile bindemittelfreie Pigmentkonzentrate herzustellen. Ebenso ist es möglich, mit den erfindungsgemäßen Kamm(block)copolymeren fließfähige Pigmentkonzentrate aus Pigmentpresskuchen herzustellen. Hierbei wird dem Presskuchen, der noch Wasser enthalten kann, ein erfindungsgemäßes Kamm(block)copolymeres zugemischt und die so erhaltene Mischung dispergiert. Solche Feststoffkonzentrate, vorzugsweise Pigmentkonzentrate, können dann in unterschiedliche Substrate wie z. B. Alkydharze, Polyesterharze, Acrylatharze, Polyurethanharze oder Epoxidharze eingearbeitet werden. Pigmente, die lösungsmittelfrei direkt in den erfindungsgemäßen Kamm(block)copolymeren dispergiert sind, eignen sich besonders zur Pigmentierung von thermoplastischen und duroplastischen Kunststoffformulierungen.

Die erfindungsgemäßen Kamm(block)copolymere können vorteilhaft auch bei der Herstellung von Tinten für "non Impact"-Druckverfahren wie "thermal inkjet" und dem "Bubblejet-Verfahren" verwendet werden. Diese Tinten können beispielsweise wässrige Tintenformulierungen, lösemittelbasierte Tintenformulierungen, lösemittelfreie oder -arme Tinten für UV-Applikationen als auch wachsartige Tinten sein.

Die erfindungsgemäßen Kamm(block)copolymeren können auch bei der Herstellung kosmetischer Zubereitungen wie zur Herstellung von Make-up, Puder, Lippenstiften, Haarfärbemitteln, Cremen, Nagellacken und Sonnenschutzpräparaten verwendet werden. Diese können in den üblichen Formulierungen wie als W/O- oder 01W-Emulsionen, Lösungen, Gele, Cremes, Lotionen oder Sprays, vorliegen. Die erfindungsgemäßen Kamm(block)copolymeren bzw. deren vorstehend aufgeführten Gemische können dabei in den zur Herstellung dieser Zubereitungen verwendeten Dispersionen bereits als Dispersionsmittel eingesetzt werden. Diese Dispersionen können die üblichen kosmetischen Trägermedien, wie zum Beispiel Wasser, Ricinusöle oder Silikonöle, und Feststoffe, wie zum Beispiel organische und anorganische Pigmente wie Titandioxid oder Eisenoxid, aufweisen.

Ein weiterer Gegenstand der vorliegenden Erfindung ist auch die Verwendung der erfindungsgemäßen Kamm(block)copolymeren als Netz- und Dispergiermittel. Vorzugsweise werden diese Netz- und Dispergiermittel für die vorstehend beschriebenen Einsatzzwecke verwendet.

Ein weiterer Einsatzzweck ist auch die Herstellung eines pigmentierten Überzuges auf einem Substrat, wobei der Pigmentlack auf das Substrat aufgebracht, und der aufgebrachte Pigmentlack eingebrannt oder ausgehärtet bzw. vernetzt wird.

Für die Einsatzzwecke der erfindungsgemäßen Kamm(block)copolymere können diese ggf. zusammen mit nach dem Stand der Technik üblichen Bindemitteln eingesetzt werden. Beim Einsatz in Polyolefinen kann es z. B. vorteilhaft sein, entsprechende niedermolekulare Polyolefine als Trägermaterialien zusammen mit mindestens einem erfindungsgemäßen Kamm(block)copolymeren einzusetzen.

Eine erfindungsgemäße Verwendung besteht u. a. auch in der Herstellung dispergierbarer, pulverpartikel- und/oder faserpartikel-förmiger Feststoffe, insbesondere in der Herstellung von dispergierbaren Pigmenten oder Kunststoffüllstoffen, wobei die Partikel mit einem erfindungsgemäßen Kamm(block)copolymeren beschichtet sein können. Derartige Beschichtungen von organischen oder anorganischen Feststoffen werden in bekannter Weise, wie sie z. B. in EP-A-O 270 126 beschrieben, ausgeführt. Hierbei kann das Lösungs- oder Emulsionsmittel entweder entfernt werden oder im Gemisch unter Bildung einer Paste verbleiben.-Solche Pasten sind gängige-Handelsprodukte, die ggf. Bindemittel sowie weitere Hilfs- und Zusatzstoffe enthalten können.

Speziell bei Pigmenten kann die Modifizierung, d. h. Beschichtung der Pigmentoberfläche durch Zusatz der erfindungsgemäßen Kamm(block)copolymeren während oder nach der Synthese der Pigmente erfolgen, d. h. durch deren Zugabe zur Pigmentsuspension oder während bzw. nach dem Pigmentfinish.

Die auf diese Weise vorbehandelten Pigmente zeichnen sich durch eine leichtere Einarbeitbarkeit sowie durch verbessertes Viskositäts-, Flockulations- und Glanzverhalten und durch eine höhere Farbstärke gegenüber nicht Oberflächen behandelten Pigmenten aus.

Die erfindungsgemäßen Kamm(block)copolymere eignen sich als Netz- und Dispergierungsmittel für eine Vielzahl von Pigmenten wie Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan-, Xanthen-, Acridin-, Chinacridon-, Methin-Pigmente, Anthrachinon-, Pyranthron-, Perylen- und andere polycyclische Carbonyl-Pigmente. Weitere Beispiele für erfindungsgemäß dispergierbare organische Pigmente finden sich in der Monographie: W. Herbst, K. Hunger "Industrial Organic Pigments", 1997 (Verlag: Wiley-VCH, ISBN: 3-527-28836-8). Beispiele für erfindungsgemäß dispergierbare, anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadatmolybdatgelb oder Chromtitangelb). Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxiden, Metalleffektpigmente aus Aluminium, Zink, Kupfer oder Messing sowie Perlglanzpigmente, fluoreszierende und phosphoreszierende Leuchtpigmente sein. Mit Hilfe der erfindungsgemäßen Kammcopolymeren bzw. deren vorstehend aufgeführten Gemische können auch nanoskalige, organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel dispergiert werden, die aus gemischten Metall- und/oder Halbmetalloxiden bzw. -hydroxiden bestehen. Hierfür geeignete Oxide sind Oxide und/oder Oxidhydroxide des Aluminiums, Siliziums, Zinks, Titans, die zur Herstellung solch extrem feinteiligen Feststoffe eingesetzt werden können. Der Herstellprozess dieser oxidischen bzw. hydroxidischen bzw. oxidhydroxidischen Teilchen kann über verschiedene Verfahren z. B. lonenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sogenannte Hyberid-Partikeln handeln, die aus einem anorganischen Kern und einer organischen Hülle oder umgekehrt aufgebaut sind.

Erfindungsgemäß dispergierbare, pulver- oder faser-förmige Füllstoffe sind u. a. solche, die aus pulver- oder faser-förmigen Teilchen von Aluminiumoxid, Aluminiumhydroxid, Siliziumdioxid, Kieselgur, Kieselende, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff aufgebaut sind. Weitere Beispiele für dispergierbare Pigmente oder Füllstoffe finden sich auch in der EP-A-0 270 126. Auch Flammschutzmittel wie z. B. Aluminium- oder Magnesiumhydroxid und Mattierungsmittel wie z. B. Kieselsäuren lassen sich ebenfalls mit den erfindungsgemäßen Kamm(block)copolymeren hervorragend dispergieren und stabilisieren.

Ein weiterer Gegenstand der vorliegenden Erfindung sind daher auch Lacke, Pasten und Formmassen - enthaltend wenigstens ein erfindungsgemäßes Kamm(block)copolymeres und wenigstens ein Pigment, ein organisches Trägermedium und/oder Wasser, sowie gegebenenfalls Bindemittel und übliche Hilfsstoffe. Ein weiterer Gegenstand der vorliegenden Erfindung sind daher auch die vorstehend genannten Pigmente beschichtet mit wenigstens einem erfindungsgemäßen Kamm(block)copolymeren.

### Beispiele:

### 1 Herstellung von Styrol/Maleinsäureanhydrid Copolymere (SMA-Harz)

### 1.1 Polymer 1: alternierendes SMA-Harz mit einem Styrol zu MSA-Verhältnis von 2:1

27,3 g Methoxypropylacetat, 4,2 g 2,4-Diphenyl-4-methyl-1-penten und 3,3 g Styrol werden auf 140°C erhitzt. Nach Erreichen der Reaktionstemperatur werden 14,4 g Maleinsäureanhydrid und 2,3 g AMBN in 21,7g Methoxypropylacetat angelöst, in 100 min hinzudosiert und 26,8 g Styrol in 85 min hinzudosiert.
Nach 1 h Nachreaktionszeit wird die Polymerlösung auf Raumtemperatur abgekühlt.
Restgehalt an 2,4-Diphenyl-4-methyl-1-penten: 0,1 %
Mₙ: 2775g/mol

### 1.2 -Polymer 2: Diblockcopolymer

27,3 g Methoxypropylacetat, 4,2 g 2,4-Diphenyl-4-methyl-1-penten werden auf 140°C erhitzt. Nach Erreichen der Reaktionstemperatur werden 14,4 g Maleinsäureanhydrid und 2,3 g AMBN in 21,7 g Methoxyproplacetat angelöst in 100 min hinzudosiert hinzudosiert und 26,8 g Styrol in 85 min hinzudosiert. Nach 15 min Nachreaktionszeit wird 1 g AMBN in 10 g Methoxypropylenacetat angelöst und 10 g Styrol in 100 min hinzudosiert.
Nach 1h Nachreaktionszeit wird die Polymerlösung auf Raumtemperatur abgekühlt.
Restgehalt an 2,4-Diphenyl-4-methyl-1-penten: 0,08%
Mₙ: 3156 g/mol

### II Umsetzung der SMA-Harze zu Kammcopolymeren

### 2.1 Kammcopolymer 1 (Vergleichsbeispiel)

100 g einer Lösung des Polymers 1 in Methoxypropylacetat werden mit 150 g Jeffamin M 2070 über 4 h bei 160°C zur Reaktion gebracht, wobei das Methoxypropylacetat abdestilliert wird.
Die Mischung wird mit Wasser auf einen-Feststoffgehalt von 40 Gew%-verdünnt.

### 2.1 Kammcopolymer 2

100 g einer Lösung des Polymers 1 in Methoxypropylacetat werden mit 120 g Jeffamin M 2070 über 4 h bei 160°C zur Reaktion gebracht, wobei das Methoxypropylacetat abdestilliert wird.
Anschließend wird die Reaktionsmasse auf Raumtemperatur abgekühlt und mit 30 g Jeffamin M 2070 versetzt.
Im letzten Schritt wird die Mischung mit Wasser auf einen Feststoffgehalt von 40 Gew% verdünnt.
Jeffamin M 2070: aminterminierter EO/PO-Polyether, Hersteller Huntsman

### III Anwendungstests

### 3.1 Formulierung zu wässrigen Pigmentkonzentraten

| | | IRGALITH ROT FBN | SUNBRITE GELB 275 - 0536 | Heliogenblau | Bayferrox 130FS | FINNTITAN R-DI-S | PRINTEX 35 |
|---|---|---|---|---|---|---|---|
| Wasser | Gew% | 37,8 | 44,5 | 42,5 | 23,4 | 15,4 | 37,5 |
| entweder Kammcopolymer 1 oder 2 | Gew% | 17,6 | 15,0 | 21,9 | 15,0 | 9,4 | 16,9 |
| BYK®-019 | Gew% | 0,5 | 0,5 | 0,5 | | 0,1 | 0,5 |
| BYK®-024 | Gew% | | | | 1,0 | | |
| BYK®-420 | Gew% | | | | 0,5 | | |
| Proxel GXL | Gew% | 0,1 | 0,1 | 0,1 | 0,1 | 0,1 | 0,1 |
| Pigment | Gew% | 44,0 | 40,0 | 35,0 | 60,0 | 75,0 | 45,0 |
| | Gew% | 100,00 | 100,0 | 100,0 | 100,0 | 100,0 | 100,0 |

| | | | | | | | |
|---|---|---|---|---|---|---|---|
| Bk®-019: Entschäumer, Hersteller Byk Chemie GmbH Bk®-024: Entschäumer, Hersteller Byk Chemie GmbH Bk®-420 : Rheologiesteuerungsmittel, Hersteller Byk Chemie GmbH Proxel GXL: Fungizid, Hersteller Zeneca | | | | | | | |

Die Dispergierung der Komponenten der Formulierung erfolgt über 40 min bei 40°C und 10000 U/min mit Hilfe von Dispermat CV

### 3.2 Formulierung zu Auflacken:

| Pigment | IRGALITH ROT FBN | Heliogenblau | Bayferrox 130FS | Printex 35 |
|---|---|---|---|---|
| Pigmentkonzentrat gem. 3.1 Gew.Teile | 5 | 5 | 5 | 5 |
| Joncryl 537 Gew.Teile | 51,3 | 38,1 | 32,5 | 32,5 |
| | | | | |

| | | | | |
|---|---|---|---|---|
| Joncryl 537: wässrige Dispersionsklarlacke, Hersteller BASF Zur Herstellung der Auflacke werden die Komponenten 10 Minuten mechanisch homogenisiert und aufgetragen. | | | | |

### 3.3 Testergebnisse

### Viskosität der Pigmentkonzentrate

Auflackierung gemäß 3.1 bzw. gemäß 3.2

### Kammcopolymer 1 (Vergleich)

| | Pigmentkonzentrat | | Auflackung | |
|---|---|---|---|---|
| | Viskosität | Schaum | Farbstärke / Transparenz | Glanz 20° / 60° |
| IRGALITHROT FBN | 2 | 1 | 2 | 40/79 |
| Heliogenblau | 2 | 1 | 2 | -/102 |
| Bayferrox 130FS | 2 | 1 | * | -/63 |
| PRINTEX 35 | 2 | 2 | 3 | 32/64 |

### Kammcopolymer 2

| | Pigmentkonzentrat | | Auflackung | |
|---|---|---|---|---|
| | Viskosität | Schaum | Farbstärke / Transparenz | Glanz 20° / 60° |
| IRGALITHROT FBN | 1 | 1 | 1 | 55/83 |
| Heliogenblau | 1 | 1 | 2 | -/135 |
| Bayferrox 130FS | 1 | 1 | * | -/64 |
| PRINTEX 35 | 1 | 1 | 2 | 50/78 |

### Beurteilungsskala: (optisch/mechanisch)

- 1: gut
- 2: befriedigend
- 3: nicht befriedigend
- *: deckendes Pigment, kann nicht beurteilt werden

Der Glanz bzw. Trübung wird mit Hilfe des Messgerätes "haze-gloss" der Firma Byk Gardner bestimmt.

### 3.4 Lösemittelhaltige UV-Lacke

### 3.4.1 Zusammensetzung

| Pigment | Heliogenblau L6700 F | Hostaperm ER 02 |
|---|---|---|
| Laromer PE 56 F | 28 Gew% | 24 Gew% |
| TPGDA | 50,4 Gew% | 50 Gew% |
| Kammcopolymer 2 | 3,6 Gew% | 6 Gew% |
| Pigmentmenge | 18 Gew% | 20 Gew% |

### 3.4.2 Zusammensetzung

| Pigment | Heliogenblau L6700 F | Hostaperm ER 02 |
|---|---|---|
| Laromer 8987 | 28 Gew% | 24 Gew% |
| TPGDA | 50,4 Gew% | 50 Gew% |
| Kammcopolymer 2 | 3,6 Gew% | 6 Gew% |
| Pigmentmenge | 18 Gew% | 20 Gew% |

| | | |
|---|---|---|
| TPGDA: Tripropylenglykoldiacrylat Laromer PE 56 F: Polyester-Acrylat Laromer 8987: Polyurethan-Acrylat Heliogenblau L6700 F: Cu-Phthalocyanin Epsilon PB 15:6 BET 54 Hostaperm ER 02: Chinacridon PV 19 BET 83 | | |

In das reaktive Lösemittel TPGDA werden nacheinander das Pigment und das Dispergiermittel (Kammcopolymer) eingewogen. Mit Hilfe eines Dispermaten wird die Mischung 30 Min. mit 800 U/Min. bei 40°C dispergiert. Nach erfolgter Dispergierung wird das Mahlgut den Acrylat-Komponenten zugegeben und weitere 10 Min. bei 2000 U/in. homogenisiert. Danach wird der Lack appliziert.

### 3.5.1 Testergebnisse des UV Lacks gemäß 3.4.1

| | Viskosität | Transparenz | Glanz 60° |
|---|---|---|---|
| Heliogenblau L6700 F | 1 | 1 | 65 |
| Hostaperm ER 02 | 1-2 | 1 | 77 |

### 3.5.2 Testergebnisse des UV Lacks gemäß 3.4.2

| | Viskosität | Transparenz | Glanz 60° |
|---|---|---|---|
| Heliogenblau L6700 F | 1 | 1 | 65 |
| Hostaperm ER 02 | 1 | 2 | 64 |

Beurteilung gemäß vorstehender Beurteilungsskala
Bestimmung des Glanzes mit Hilfe des vorstehend angegebenen Gerätes.

## Patentansprüche

1. Ein Kamm(block)copolymeres erhältlich durch Umsetzung von
I wenigstens einem (Block)Copolymerisat umfassend polymerisierte, ggf. substituierte Styrol- und Maleinsäureanhydrid-Einheiten, das durch kontrollierte, radikalische Polymerisation erhalten wurde,
mit
II wenigstens einem eine primäre Aminoendgruppe aufweisenden Polyalkylenoxidmonoamin bei einer Reaktionstemperaturen von ≥ 150 °C und durch eine anschließende Versalzung von wenigstens 25 mol% der freien Carboxylgruppen des Umsetzungsproduktes bei einer Reaktionstemperatur <100°C und ggf. nach Zugabe von H₂O.

2. Ein Kamm(block)copolymeres nach Anspruch 1, **dadurch gekennzeichnet, dass** das (Black)Copolymerisat I durch eine C-RAFT-Polymerisation, vorzugsweise mit 2,4-Diphenyl-4-methyl-1-penten als Kettenübertragungsverbindung erhalten wurde.

3. Ein Kamm(block)copolymeres nach Anspruch 1 oder 2, **dadurch gekennzeichnet, dass** das (Block)Copolymerisat I einen alternierenden, gradientenartigen oder blockartigen Aufbau der ggf. substituierten Styrol- bzw. Maleinsäureanhydrid-Einheiten aufweist.

4. Ein Kamm(block)copolymeres nach einem der Ansprüche 1 bis 3, **dadurch gekennzeichnet, dass** das (Block)Copolymerisat I ein Mol-Verhältnis der ggf. substituierten Styrol- zu Maleinsäureanhydrid-Einheiten von 1:1 bis 8:1 aufweist.

5. Ein Kamm(block)copolymeres nach Anspruch 4 **dadurch gekennzeichnet, dass** das (Block)copolymerisat I ein Mol-Verhältnis der ggf. substituierten Styrol- zu Maleinsäureanhydrid-Einheiten von 1:1 bis 2:1 aufweist.

6. Ein Kamm(block)copolymeres nach einem der Ansprüche 1 bis 5, **dadurch gekennzeichnet, dass** bei der Umsetzung bei der Reaktionstemperatur von ≥ 150°C nur ein Teil des eine primäre Aminoendgruppe aufweisenden Polyalkylenoxidmonoamins, umgesetzt werden.

7. Ein Kamm(block)copolymeres nach Anspruch 6 **dadurch gekennzeichnet, dass** bei der Umsetzung bei der Reaktionstemperatur von ≥ 150°C wenigstens 50 Gew% des eine primäre Aminoendgruppe aufweisenden Polyalkylenoxidmonoamins umgesetzt werden.

8. Ein Kamm(block)copolymeres nach einem der Ansprüche 1 bis 7, **dadurch gekennzeichnet, dass** die eine primäre Aminoendgruppen aufweisende Polyalkylenoxidmonoaminkomponente aus Ethylenoxid- und/oder Propylenoxid-Einheiten aufgebaut ist, wobei das Molverhältnis der Ethylenoxid-Einheiten zu den Propylenoxid-Einheiten 5:95 bis 100:0, beträgt.

9. Ein Kamm(block)copolymeres nach Anspruch 8 **dadurch gekennzeichnet, dass** die eine primäre Aminoendgruppe aufweisende Polyalkylenoxidmonoaminkomponente aus Ethylenoxid- und Propylenoxid-Einheiten in einem Molverhältnis der Ethylenoxid-Einheiten zu den Propylenoxid-Einheiten von 30:70 bis 70:30 aufgebaut ist.

10. Ein Kamm(block)copolymeres nach einem der Ansprüche 1 bis 9, **dadurch gekennzeichnet, dass** der erste Teil der Gesamtmenge des eine primäre Aminoendgruppe aufweisenden Polyalkylenoxidmonoamins bei der Umsetzung bei ≥ 150°C und der Rest ggf. unter Zugabe eines tertiären Monoamins nach Absenkung der Reaktionstemperatur unter 100°C zugegeben wird.

11. Ein Kamm(block)copolymeres nach einem der Ansprüche 1 bis 10, **dadurch gekennzeichnet, dass** die Versalzung unter Zugabe einer weiteren Aminokomponente durchgeführt wird.

12. Ein Kamm(block)copolymeres nach Anspruch 11, **dadurch gekennzeichnet, dass** als weitere Aminokomponente mindestens ein von dem bereits zur Umsetzung eingesetzten, eine primäre Aminoendgruppe aufweisendes Polyalkylenoxidmonoamin unterschiedliches, eine primäre Aminoendgruppe aufweisendes Polyalkylenoxidmonoamin ggf. im Gemisch mit einem tertiären Monoamin eingesetzt wird.

13. Ein Kamm(block)copolymeres nach einem der Ansprüche 1 bis 12, **dadurch gekennzeichnet, dass** zur Versalzung Wasser zugegeben wird.

14. Netz- und Dispergiermittel basierend auf einem Kamm(blick)copolymeren nach einem der Ansprüche 1-13.

15. Verwendung von wenigstens einem Kamm(block)copolymeren nach einem der Ansprüche 1-14 als Netz- und Dispergiermittel, ggf. unter Mitverwendung von üblichen Hilfsstoffen, vorzugsweise üblichen Binde mitteln.

16. Verwendung nach Anspruch 15 für Feststoffe, vorzugsweise Pigmente und/oder Füllstoffe.

17. Verwendung nach Anspruch 15 oder 16 bei der Herstellung und/oder Verarbeitung von Feststoffkonzentraten, vorzugsweise Pigmentkonzentraten oder Pigmentpasten, oder bei der Herstellung und/oder Verarbeitung von Lacken, Druckfarben, Tinten für inkjet-Verfahren, Papierstrich, Leder- und/oder Textilfarben, Keramiken, kosmetischen Zubereitungen, oder bei der Herstellung und/oder Verarbeitung von Gies- und/oder Formmassen auf Basis von synthetischen, halbsynthetischen oder natürlichen Polymeren.

18. Lacke, Pasten oder Formmassen enthaltend wenigstens ein Kamm(block)copolymeres erhältlich nach einem der Ansprüche 1 bis 13 als Netz- und Dispergiermittel, wenigstens einen Feststoff, ggf. ein organischen oder wässriges Medium, ggf. wenigstens ein Bindemittel und/oder ggf. weitere übliche Hilfsstoffe.

19. Lacke, Pasten oder Formmassen gemäß Anspruch 18 **dadurch gekennzeichnet, dass** als Feststoff ein Pigment und als ggf. weiterer üblicher Hilfsstoff wenigstens ein weiteres übliches Netz- und Dispergiermittel enthalten ist.

20. Ein Pigment, dessen Oberfläche mit wenigstens einem Kamm(block)copolymeren erhältlich nach einem der Ansprüche 1 bis 13 modifiziert ist.

## Claims

1. A comb (block) copolymer obtainable by reacting
I at least one (block) copolymer comprising polymerised, optionally substituted styrene and maleic anhydride units, which copolymer has been obtained by controlled radical polymerisation,
with
II at least one polyalkylene oxide monoamine comprising a primary amino end group at a reaction temperature of ≥ 150°C and by subsequent salification of at least 25 mol% of the free carboxyl groups of the reaction product at a reaction temperature of < 100°C and optionally after addition of H₂O.

2. A comb (block) copolymer according to claim 1, **characterised in that** the (block) copolymer I has been obtained by C-RAFT polymerisation, preferably with 2,4-diphenyl-4-methyl-1-pentene as chain-transfer compound.

3. A comb (block) copolymer according to claim 1 or 2, **characterised in that** the (block) copolymer I has an alternating, gradient-type or block-type structure of the optionally substituted styrene/maleic anhydride units.

4. A comb (block) copolymer according to one of claims 1 to 3, **characterised in that** the (block) copolymer I has a molar ratio of the optionally substituted styrene to maleic anhydride units of from 1:1 to 8:1.

5. A comb (block) copolymer according to claim 4, **characterised in that** the (block) copolymer I has a molar ratio of the optionally substituted styrene to maleic anhydride units of from 1:1 to 2:1.

6. A comb (block) copolymer according to one of claims 1 to 5, **characterised in that** during the reaction at the reaction temperature of ≥ 150°C, only a part of the polyalkylene oxide monoamine comprising a primary amino end group is reacted.

7. A comb (block) copolymer according to claim 6, **characterised in that** during the reaction at the reaction temperature of ≥ 150°C, at least 50% by weight of the polyalkylene oxide monoamine comprising a primary amino end group is reacted.

8. A comb (block) copolymer according to one of claims 1 to 7, **characterised in that** the polyalkylene oxide monoamine component comprising a primary amino end group is made up of ethylene oxide and/or propylene oxide units, wherein the molar ratio of the ethylene oxide units to the propylene oxide units is 5:95 to 100:0.

9. A comb (block) copolymer according to claim 8, **characterised in that** the polyalkylene oxide monoamine component comprising a primary amino end group is made up of ethylene oxide and/or propylene oxide units in a molar ratio of the ethylene oxide units to the propylene oxide units from 30 :70 to 70:30.

10. A comb (block) copolymer according to one of claims 1 to 9, **characterised in that** the first part of the total amount of the polyalkylene oxide monoamine comprising a primary amino end group is added during the reaction at ≥ 150°C and the remainder is added, optionally with the addition of a tertiary monoamine, after lowering the reaction temperature to below 100°C.

11. A comb (block) copolymer according to one of claims 1 to 10, **characterised in that** the salification is carried out with the addition of a further amino component.

12. A comb (block) copolymer according to claim 11, **characterised in that** the further amino component used is at least one polyalkylene oxide monoamine which comprises a primary amino end group and is different from the polyalkylene oxide monoamine which comprises a primary amino end group and has already been used for the reaction, optionally mixed with a tertiary monoamine.

13. A comb (block) copolymer according to one of claims 1 to 12, **characterised in that** water is added for the salification.

14. Wetting agent and dispersant based on a comb (block) copolymer according to one of claims 1-13.

15. Use of at least one comb (block) copolymer according to one of claims 1-14 as wetting agents and dispersants, optionally also using conventional auxiliary substances, preferably conventional binders.

16. Use according to claim 15 for solids, preferably pigments and/or fillers.

17. Use according to claim 15 or 16 in the production and/or processing of concentrates of solids, preferably pigment concentrates or pigment pastes, or in the production and/or processing of coating materials, printing inks, inks for inkjet processes, paper coatings, leather and/or textile dyes, ceramics, cosmetic preparations, or in the production and/or processing of casting and/or moulding compositions based on synthetic, semi-synthetic or natural polymers.

18. Coating materials, pastes or moulding compositions containing at least one comb (block) copolymer obtainable in accordance with one of claims 1 to 13 as wetting agents and dispersants, at least one solid, optionally an organic or aqueous medium, optionally at least one binder and/or optionally further conventional auxiliary substances.

19. Coating materials, pastes or moulding compositions according to claim 18, **characterised in that** a pigment is used as the solid and at least one further conventional wetting agent and dispersant is contained as the optionally further conventional auxiliary substance.

20. A pigment, the surface of which is modified by at least one comb (block) copolymer obtainable in accordance with one of claims 1 to 13.

## Revendications

1. Copolymère en peigne (à blocs) pouvant être obtenu par transformation de
I au moins un copolymère (à blocs) comprenant des unités polymérisées, le cas échéant substituées, de styrène et d'anhydride de l'acide maléique, qui a été obtenu par polymérisation contrôlée, par voie radicalaire, avec
II au moins une poly(oxyde d'alkylène)monoamine présentant un groupe terminal amino primaire à une température de réaction ≥ 150°C et par salification consécutive d'au moins 25% en mole des groupes carboxyle libres du produit de transformation à une température de réaction < 100°C et le cas échéant après addition de H₂O.

2. Copolymère en peigne (à blocs) selon la revendication 1, **caractérisé en ce que** le copolymère (à blocs) I a été obtenu par polymérisation C-RAFT, de préférence avec du 2,4-diphényl-4-méthyl-1-pentène comme composé de transfert de chaîne.

3. Copolymère en peigne (à blocs) selon la revendication 1 ou 2, **caractérisé en ce que** le copolymère (à blocs) I présente une structure séquencée, de type gradient ou en blocs des unités de styrène ou, selon le cas, d'anhydride de l'acide maléique le cas échéant substituées.

4. Copolymère en peigne (à blocs) selon l'une quelconque des revendications 1 à 3, **caractérisé en ce que** le copolymère (à blocs) I présente un rapport molaire des unités de styrène aux unités d'anhydride de l'acide maléique le cas échéant substituées de 1:1 à 8:1.

5. Copolymère en peigne (à blocs) selon la revendication 4, **caractérisé en ce que** le copolymère (à blocs) I présente un rapport molaire des unités de styrène aux unités d'anhydride de l'acide maléique le cas échéant substituées de 1:1 à 2:1.

6. Copolymère en peigne (à blocs) selon l'une quelconque des revendications 1 à 5, **caractérisé en ce que**, lors de la transformation à la température de réaction ≥ 150°C, on ne transforme qu'une partie de la poly(oxyde d'alkylène)monoamine présentant un groupe terminal amino primaire.

7. Copolymère en peigne (à blocs) selon la revendication 6, **caractérisé en ce que**, lors de la transformation à la température de réaction ≥ 150°C, on transforme au moins 50% en poids de la poly(oxyde d'alkylène)monoamine présentant un groupe terminal amino primaire.

8. Copolymère en peigne (à blocs) selon l'une quelconque des revendications 1 à 7, **caractérisé en ce que** le composant de poly(oxyde d'alkylène)monoamine présentant un groupe terminal amino primaire est formé à partir d'unités d'oxyde d'éthylène et/ou d'oxyde de propylène, où le rapport molaire des unités d'oxyde d'éthylène aux unités d'oxyde de propylène est de 5:95 à 100:0.

9. Copolymère en peigne (à blocs) selon la revendication 8, **caractérisé en ce que** le composant de poly(oxyde d'alkylène)monoamine présentant un groupe terminal amino primaire est formé à partir d'unités d'oxyde d'éthylène et/ou d'oxyde de propylène, dans un rapport molaire des unités d'oxyde d'éthylène aux unités d'oxyde de propylène de 30:70 à 70:30.

10. Copolymère en peigne (à blocs) selon l'une quelconque des revendications 1 à 9, **caractérisé en ce que** la première partie de la quantité totale de la poly(oxyde d'alkylène)monoamine présentant un groupe terminal amino primaire est ajoutée lors de la transformation à ≥150°C et le reste est ajouté, le cas échéant avec addition d'une monoamine tertiaire, après diminution de la température de réaction au-dessous de 100°C.

11. Copolymère en peigne (à blocs) selon l'une quelconque des revendications 1 à 10, **caractérisé en ce que** la salification est réalisée en ajoutant un autre composant amino.

12. Copolymère en peigne (à blocs) selon la revendication 11, **caractérisé en ce qu'**on utilise comme autre composant amino au moins une poly(oxyde d'alkylène)monoamine présentant un groupe terminal amino primaire différente de la poly(oxyde d'alkylène)monoamine présentant un groupe terminal amino primaire déjà utilisée pour la transformation, le cas échéant avec mélange avec une monoamine tertiaire.

13. Copolymère en peigne (à blocs) selon l'une quelconque des revendications 1 à 12, **caractérisé en ce qu'**on ajoute de l'eau pour la salification.

14. Agent réticulant et dispersant à base d'un copolymère en peigne (à blocs) selon l'une quelconque des revendications 1-13.

15. Utilisation d'au moins un copolymère en peigne (à blocs) selon l'une quelconque des revendications 1-14 comme réticulant et dispersant, le cas échéant avec utilisation conjointe d'adjuvants usuels, de préférence des liants usuels.

16. Utilisation selon la revendication 15 pour des solides, de préférence des pigments et/ou des charges.

17. Utilisation selon la revendication 15 ou 16 lors de la préparation et/ou de la transformation de concentrats solides, de préférence des concentrats de pigments ou des pâtes pigmentaires, ou lors de la préparation et/ou de la transformation de laques, d'encres d'imprimerie, d'encres pour des procédés par jet d'encre, de couchages du papier, d'encres pour cuir et/ou textile, de céramiques, de préparations cosmétiques, ou lors de la préparation et/ou de la transformation de masses de coulage et/ou de moulage à base de polymères synthétiques, semi-synthétiques ou naturels.

18. Laques, pâtes ou masses de moulage contenant au moins un copolymère en peigne (à blocs) pouvant être obtenu selon l'une quelconque des revendications 1 à 13 comme mouillant et dispersant, au moins un solide, le cas échéant un agent organique ou aqueux, le cas échéant au moins un liant et/ou le cas échéant d'autres adjuvants.

19. Laques, pâtes ou masses de moulage selon la revendication 18, **caractérisées en ce qu'**elles contiennent comme solide un pigment et comme, le cas échéant, autre adjuvant usuel au moins un autre agent mouillant et dispersant usuel.

20. Pigment dont la surface est modifiée avec au moins un copolymère en peigne (à blocs) pouvant être obtenu selon l'une quelconque des revendications 1 à 13.
